# EUROPÄISCHE PATENTSCHRIFT

(11) **EP 3 988 809 B1**
(45) Veröffentlichungstag und Bekanntmachung des Hinweises auf die Patenterteilung: **27.12.2023**
(21) Anmeldenummer: 20203148.0
(22) Anmeldetag: 21.10.2020
(51) Int. Cl.: F16D 48/06

(54) **VERFAHREN ZUM BETREIBEN EINES GARTENGERÄTS UND GARTENGERÄT**
GARDENING DEVICE AND METHOD FOR OPERATING A GARDENING DEVICE
PROCÉDÉ DE FONCTIONNEMENT D'UN APPAREIL DE JARDINAGE ET APPAREIL DE JARDINAGE

(43) Veröffentlichungstag der Anmeldung: 27.04.2022
(73) Patentinhaber: Andreas Stihl AG & Co. KG, 71336 Waiblingen (DE)
(72) Erfinder: KIPPES, Markus, 83098 Brannenburg (DE); KUGLER, Ingo, 71334 Waiblingen (DE); FRÖHLICH, Tobias, 71672 Marbach (DE)
(74) Vertreter: Patentanwälte Ruff, Wilhelm, Beier, Dauster & Partner mbB

(56) Entgegenhaltungen:
- EP-A1- 1 860 340
- CN-A- 104 904 405
- CN-A- 106 900 690
- US-A- 3 999 643

## Beschreibung

### ANWENDUNGSGEBIET UND STAND DER TECHNIK

Die Erfindung bezieht sich auf ein Verfahren zum Betreiben eines Gartengeräts und ein Gartengerät.

Die US 3 999 643 A offenbart einen von einem Getriebehebel betätigten Schalter eingebaut in den elektrischen Steuerkreis für eine elektrische Kupplung, die beim Antrieb eines an einem Traktor montierten Mähers verwendet wird, wodurch der elektrische Kreis immer dann entregt wird, wenn der Getriebesteuerhebel in seine Rückwärtsstellung gebracht wird. Der Steuerkreis für die elektrische Kupplung enthält einen sitzbetätigten Schalter, wodurch der elektrische Kreis entregt wird, wenn der Sitz unbesetzt ist. Der elektrische Kreis umfasst ferner einen Ein-Aus-Schalter, der mit einem Zündkreisschalter für einen Verbrennungsmotor verbunden ist, wodurch, wenn der Zündschalter geschlossen ist, der Ein-Aus-Schalter für den elektrischen Kupplungskreis geöffnet ist. Somit wird während des Startens des Motors der Mähmesserantrieb aufgrund der Entregung des elektrischen Kupplungssteuerkreises außer Betrieb sein. Die elektrische Verriegelungssteuerung verhindert den Betrieb des Mähmessers während des Startens des Motors, wenn der Fahrersitz nicht besetzt ist und/oder wenn die Getriebesteuerung im Rückwärtsgang ist.

Die EP 1 860 340 A1 offenbart, dass bei einem Fahrantriebsmechanismus für eine selbstfahrende Arbeitsmaschine, wie beispielsweise einen selbstfahrenden Rasenmäher, gefahren unter Verwendung der Leistung eines Elektromotors das Drehmoment einer Antriebswelle, die durch die Leistung des Elektromotors angetrieben wird, über eine Kraftübertragungseinheit auf Fahrantriebsräder über Zweiwege- oder bidirektionale Kupplungen übertragen wird, die an beiden Enden der Antriebswelle vorgesehen sind. Kraftübertragungseinheiten sind zwischen der bidirektionalen Kupplung und den Antriebsrädern vorgesehen. Eine Fahrsteuereinheit ist vorgesehen, um ein Anweisungssignal einzugeben, das durch die Betätigung eines Fahrbetätigungselements erzeugt wird, das durch den Bediener betätigt wird, und um den Elektromotor zu steuern. Wenn ein durch die Betätigung des Fahrbetätigungselements erzeugtes Fahrstoppsignal in die Fahrsteuereinheit eingegeben wird, tritt ein Kurzschlussstopp (Kurzschlussbremsen) auf, während dem Elektromotor elektrische Energie zugeführt wird, und die Antriebswelle verbunden mit dem Elektromotor stoppt. Da sich die Fahrantriebsräder aufgrund von Trägheit drehen, werden die bidirektionalen Kupplungen in einen ausgerückten Zustand gebracht. Der Bediener kann somit die Arbeitsmaschine nach der Fahrt durch die Antriebsquelle oder nach deren Stopp leicht ziehen und schieben, indem er eine einfache Struktur verwendet, bei der die bidirektionale Kupplung zum Übertragen der Fahrkraft verwendet wird.

### AUFGABE UND LÖSUNG

Der Erfindung liegt als Aufgabe die Bereitstellung eines Verfahrens zum Betreiben eines Gartengeräts und eines Gartengeräts zugrunde, das jeweils verbesserte Eigenschaften aufweist, insbesondere eine hohe Benutzerfreundlichkeit und/oder eine lange Lebensdauer des Gartengeräts ermöglicht.

Die Erfindung löst diese Aufgabe durch die Bereitstellung eines Verfahrens mit den Merkmalen des Anspruchs 1 und eines Gartengeräts mit den Merkmalen des Anspruchs 14. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Betreiben eines, insbesondere elektrischen, Gartengeräts ausgebildet bzw. konfiguriert bzw. vorgesehen. Das Gartengerät umfasst bzw. weist ein, insbesondere elektrisches, Fahrantriebssystem auf. Das Fahrantriebssystem umfasst bzw. weist, insbesondere zum Vorwärtstreiben bzw. zur Fortbewegung des Gartengeräts, eine Kupplung, ein Elektromotorantriebssystem und eine benutzerauslösbare, insbesondere elektrische, Signaleinrichtung auf. Die Kupplung ist, insbesondere nur, durch Vorwärtsdrehen, insbesondere eines Teils der Kupplung, zum selbsttätigen bzw. eigenständigen Einkuppeln zum Vorwärtstreiben des Gartengeräts und durch, insbesondere zum Vorwärtsdrehen entgegengesetztes bzw. umgekehrtes, Rückwärtsdrehen, insbesondere eines, insbesondere des, Teils der Kupplung, zum selbsttätigen bzw. eigenständigen Auskuppeln bzw. Lösen zum Freilauf des Gartengeräts ausgebildet bzw. konfiguriert. Das Elektromotorantriebssystem ist zum Vorwärtsdrehen, insbesondere zum Einkuppeln der Kupplung zum Vorwärtstreiben des Gartengeräts, und zum Rückwärtsdrehen der Kupplung, insbesondere des Teils der Kupplung, insbesondere zum Auskuppeln der Kupplung zum Freilauf des Gartengeräts, ausgebildet bzw. konfiguriert. Das Verfahren umfasst bzw. weist die Schritte auf: a) benutzerausgelöst durch eine Veränderung eines, insbesondere veränderbaren und/oder elektrischen, Signalzustands, insbesondere eines Werts des Signalzustands, insbesondere eines Fahrsignalzustands, der Signaleinrichtung Betreiben, insbesondere automatisches Betreiben, des Elektromotorantriebssystems in einem Auslauf- und/oder Brems-Betriebsmodus zum Erniedrigen einer Motordrehzahl, insbesondere eines Werts der Motordrehzahl, insbesondere zum Erreichen eines Stillstands, des vorwärtsdrehenden Elektromotorantriebssystems, b) Erfassen, insbesondere automatisches Erfassen, bzw. Detektieren bzw. Messen, insbesondere Überwachen, ob eine gegenelektromotorische Kraft, insbesondere ein Wert der Kraft, verursacht durch das, insbesondere ausgelaufene und/oder auslaufende, Elektromotorantriebssystem oder eine auf der gegenelektromotorischen Kraft basierende Größe, insbesondere ein Wert der Größe, ein Stillstands-Kriterium erfüllt, insbesondere oder nicht. Das Stillstands-Kriterium ist für ein, insbesondere vergangenes und/oder gegenwärtiges und/oder zukünftiges, Erreichen eines Stillstands des Elektromotorantriebssystems charakteristisch. c) Falls bzw. wenn das Stillstands-Kriterium erfüllt ist, Betreiben, insbesondere automatisches Betreiben, des Elektromotorantriebssystems in einem Rückwärtsdreh-Betriebsmodus zum Rückwärtsdrehen des, insbesondere stillstehenden, Elektromotorantriebssystems zum Auskuppeln der Kupplung zum Freilauf des Gartengeräts.

Dies, insbesondere das Fahrantriebssystem, ermöglicht, dass ein Benutzer des Gartengeräts dieses nicht zu schieben braucht. Somit ermöglicht dies eine hohe Benutzerfreundlichkeit. Zusätzlich oder alternativ ermöglicht dies, insbesondere der Schritt b), zu gewährleisten, den Schritt c) auszuführen bzw. das Elektromotorantriebssystem in dem Rückwärtsdreh-Betriebsmodus zu betreiben, insbesondere erst dann, falls bzw. wenn die Motordrehzahl niedrig ist, insbesondere das Elektromotorantriebssystem stillsteht, insbesondere aufgrund des Ausführens des Schritts a) bzw. des Betreibens des Elektromotorantriebssystems in dem Auslauf- und/oder Brems-Betriebsmodus. Somit ermöglicht dies eine, insbesondere mechanische, Belastung auf das Fahrantriebssystem, insbesondere die Kupplung, niedrig zu halten oder sogar ganz zu vermeiden. Somit ermöglicht dies eine lange Lebensdauer des Fahrantriebssystems, insbesondere der Kupplung, und somit des Gartengeräts. Weiter zusätzlich oder alternativ ermöglicht dies, insbesondere das Verfahren, den Freilauf des Gartengeräts, insbesondere ohne, insbesondere großes, Zutun des Benutzers. Somit ermöglicht dies, insbesondere der Freilauf, dass der Benutzer bei Bedarf das Gartengerät einfach manövrieren, insbesondere rückwärtsziehen, kann, wie z.B. in einer Garage. Somit ermöglicht dies eine hohe Benutzerfreundlichkeit.

Insbesondere kann das Gartengerät ein Gartenbearbeitungsgerät sein. Zusätzlich oder alternativ kann das Gartengerät handgeführt und/oder bodengeführt sein. Weiter zusätzlich oder alternativ kann das Gartengerät eine Masse von maximal 100 Kilogramm (kg), insbesondere von maximal 50 kg, insbesondere von maximal 20 kg, und/oder von minimal 5 kg, insbesondere von minimal 10 kg, aufweisen bzw. haben.

Die Kupplung kann eine formschlüssige Kupplung aufweisen, insbesondere sein. Zusätzlich oder alternativ kann die Kupplung dazu ausgebildet sein, ohne Vorwärtsdrehen, insbesondere mittels des Elektromotorantriebssystems, ausgekuppelt zu bleiben.

Selbsttätig oder automatisch kann, insbesondere unmittelbar, unabhängig von dem Benutzer bedeuten.

Zu ein- und demselben Zeitpunkt kann das Elektromotorantriebssystem entweder vorwärtsdrehen oder rückwärtsdrehen.

Das Betreiben des Elektromotorantriebssystems in dem Auslauf-Betriebsmodus braucht oder kann kein Rückwärtsdrehen des Elektromotorantriebssystems ermöglichen. Zusätzlich oder alternativ kann der Auslauf-Betriebsmodus als Leerlauf-Betriebsmodus bezeichnet werden.

Der Auslauf- und/oder Brems-Betriebsmodus und der Rückwärtsdreh-Betriebsmodus können verschieden sein.

Die gegenelektromotorische Kraft kann von der Motordrehzahl abhängig, insbesondere zu der Motordrehzahl proportional, sein. Zusätzlich oder alternativ kann in dem Schritt b) die gegenelektromotorische Kraft erfasst werden. Weiter zusätzlich oder alternativ kann in dem Schritt b) erfasst werden, dass das Stillstands-Kriterium erfüllt ist, falls bzw. wenn keine gegenelektromotorische Kraft oder keine Größe erfasst werden kann bzw. erfassbar ist bzw. die Kraft oder die Größe nicht erfassbar bzw. nicht vorhanden bzw. null ist, insbesondere wenn die Motordrehzahl null ist bzw. das Elektromotorantriebssystem stillsteht.

Falls das Stillstands-Kriterium, insbesondere innerhalb einer vorgegebenen Zeitdauer, nicht erfüllt ist, braucht oder kann der Schritt c) bzw. das Verfahren weiter nicht ausgeführt bzw. abgebrochen werden.

Der Schritt c) braucht oder kann nicht, insbesondere unmittelbar, benutzerausgelöst durch eine, insbesondere die, Veränderung des Signalzustands der Signaleinrichtung ausgeführt werden.

Der Schritt c) kann zeitlich nach dem Schritt b) ausgeführt werden.

Das Stillstands-Kriterium ist, dass die gegenelektromotorische Kraft, insbesondere ein Wert der Kraft, oder die auf der gegenelektromotorischen Kraft basierende Größe, insbesondere ein Wert der Größe, gleich oder kleiner als ein Stillstands-Obergrenzwert ist. Insbesondere kann der Stillstands-Obergrenzwert 0,2-mal, insbesondere 0,1-mal, insbesondere 0,05-mal, eines Werts der Kraft oder der Größe bei bzw. für eine/r maximale/n Motordrehzahl des vorwärtsdrehenden Elektromotorantriebssystems sein.

In einer Weiterbildung der Erfindung ist das Gartengerät ein Rasenmäher.

In einer Weiterbildung der Erfindung umfasst bzw. weist die Kupplung mindestens eine Klauenkupplung (Englisch: Dog-clutch) auf. Die Klauenkupplung ist durch Rückwärtsdrehen, insbesondere eines Teils der Klauenkupplung, zum selbsttätigen bzw. eigenständigen Auskuppeln bzw. Lösen, insbesondere zum Freilauf des Gartengeräts, ausgebildet bzw. konfiguriert. Zusätzlich oder alternativ umfasst bzw. weist die Kupplung mindestens eine Schrägflächen-Betätigungsmechanik auf. Die Schrägflächen-Betätigungsmechanik ist, insbesondere zum Rückwärtsdrehen, insbesondere des Teils, der Klauenkupplung und, insbesondere nur, durch Vorwärtsdrehen zum selbsttätigen bzw. eigenständigen Einkuppeln, insbesondere der Klauenkupplung, insbesondere zum Vorwärtstreiben des Gartengeräts, ausgebildet bzw. konfiguriert. Insbesondere kann das Elektromotorantriebssystem zum Vorwärtsdrehen, insbesondere zum Einkuppeln der Klauenkupplung zum Vorwärtstreiben des Gartengeräts, und zum Rückwärtsdrehen der Schrägflächen-Betätigungsmechanik, insbesondere zum Auskuppeln der Klauenkupplung zum Freilauf des Gartengeräts, ausgebildet sein. Zusätzlich oder alternativ kann die Schrägflächen-Betätigungsmechanik zum Vorwärtsdrehen der Klauenkupplung, insbesondere zum Vorwärtstreiben des Gartengeräts, ausgebildet sein.

In einer Weiterbildung der Erfindung umfasst bzw. weist das Elektromotorantriebssystem einen Gleichstrommotor bzw. einen Gleichstrom-Antriebsmotor, insbesondere einen Permanentmagnet-Gleichstrommotor (Englisch: Permanent Magnet Direct Current (PMDC) motor) bzw. einen Permanentmagnet-Gleichstrom-Antriebsmotor, auf. Der Gleichstrommotor ist zum Vorwärtsdrehen und zum Rückwärtsdrehen der Kupplung ausgebildet bzw. konfiguriert. Dies ermöglicht das Betreiben des Elektromotorantriebssystems in mindestens dem Auslauf- und/oder Brems-Betriebsmodus und/oder das Erfassen, ob die gegenelektromotorische Kraft oder die Größe das Stillstands-Kriterium erfüllt. Insbesondere kann die Motordrehzahl eine Motordrehzahl des Gleichstrommotors sein.

In einer Weiterbildung, insbesondere einer Ausgestaltung, der Erfindung umfasst bzw. weist das Elektromotorantriebssystem eine, insbesondere elektronische, Brückenschaltung, insbesondere eine Voll-Brückenschaltung, insbesondere einen Vierquadrantensteller, zum Betreiben des Elektromotorantriebssystems, insbesondere aufweisend den Gleichstrommotor, in mindestens dem Auslauf- und/oder Brems-Betriebsmodus und dem Rückwärtsdreh-Betriebsmodus auf.

In einer Weiterbildung der Erfindung ist in dem Schritt a) der Brems-Betriebsmodus ein Kurzschluss-Brems-Betriebsmodus. Zusätzlich oder alternativ wird der Schritt b), insbesondere nur, zeitlich nach dem Schritt a), insbesondere und nicht zeitlich vor und/oder zeitlich mit dem Schritt a), ausgeführt. Dies, insbesondere das Betreiben des Elektromotorantriebssystems in dem Kurzschluss-Brems-Betriebsmodus, ermöglicht ein schnelles Erniedrigen der Motordrehzahl, insbesondere ein schnelles Erreichen des Stillstands, des vorwärtsdrehenden Elektromotorantriebssystems. Zusätzlich oder alternativ ermöglicht dies, insbesondere das Ausführen des Schritts b) zeitlich nach dem Schritt a), das Erfassen, ob die gegenelektromotorische Kraft oder die Größe das Stillstands-Kriterium erfüllt. Insbesondere braucht oder kann das Betreiben des Elektromotorantriebssystems in dem Kurzschluss-Brems-Betriebsmodus kein Rückwärtsdrehen des Elektromotorantriebssystems ermöglichen. Zusätzlich oder alternativ braucht oder kann zeitlich mit dem Betreiben des Elektromotorantriebssystems in dem Kurzschluss-Brems-Betriebsmodus das Erfassen, ob die gegenelektromotorische Kraft oder die Größe das Stillstands-Kriterium erfüllt, nicht möglich sein.

In einer Weiterbildung der Erfindung wird der Schritt a), insbesondere genau, für eine, insbesondere fest, vorgegebene Zeitdauer, insbesondere einen vorgegebenen Wert der Zeitdauer, insbesondere abhängig von einer letzten Motordrehzahl, insbesondere einem Wert der Motordrehzahl, oder einer letzten der letzten Motordrehzahl korrespondierenden bzw. entsprechenden, insbesondere proportionalen, Größe, insbesondere einem Wert der Größe, wie z.B. ein Motorstrom des Elektromotorantriebssystems, insbesondere des Gleichstrommotors, zeitlich vor dem Schritt a), ausgeführt. Dies ermöglicht ein starkes Erniedrigen der Motordrehzahl, insbesondere das Erreichen des Stillstands, des Elektromotorantriebssystems, insbesondere derart, dass die gegenelektromotorische Kraft oder die Größe das Stillstands-Kriterium erfüllen kann, insbesondere erfüllt.

In einer Weiterbildung der Erfindung umfasst bzw. weist der Schritt b) auf: Betreiben, insbesondere automatisches Betreiben, des Elektromotorantriebssystems in dem Auslauf-Betriebsmodus, insbesondere und nicht in dem Brems-Betriebsmodus. Dies ermöglicht das Erfassen, ob die gegenelektromotorische Kraft oder die Größe das Stillstands-Kriterium erfüllt.

In einer Weiterbildung der Erfindung umfasst bzw. weist das Verfahren, insbesondere zeitlich vor dem Schritt a), den Schritt auf: benutzerausgelöst durch eine andere Veränderung eines, insbesondere des, Signalzustands, insbesondere eines Werts des Signalzustands, der Signaleinrichtung Betreiben, insbesondere automatisches Betreiben, des Elektromotorantriebssystems in einem Vorwärtsdreh-Betriebsmodus zum Vorwärtsdrehen, insbesondere zum Erhöhen der Motordrehzahl, des, insbesondere stillstehenden, Elektromotorantriebssystems, insbesondere zum Einkuppeln der Kupplung und, zum Vorwärtstreiben des Gartengeräts. Dies ermöglicht, dass der Benutzer des Gartengeräts dieses nicht zu schieben braucht. Insbesondere kann der Vorwärtsdreh-Betriebsmodus von dem Auslauf- und/oder Brems-Betriebsmodus und/oder dem Rückwärtsdreh-Betriebsmodus verschieden sein.

In einer Weiterbildung, insbesondere einer Ausgestaltung, der Erfindung ist die benutzerauslösbare Signaleinrichtung, insbesondere mindestens teilweise, benutzerbeweglich, insbesondere zu der anderen Veränderung des Signalzustands der Signaleinrichtung, soweit vorgesehen, ausgebildet bzw. konfiguriert. Das Fahrantriebssystem umfasst bzw. weist ein Rückstellelement auf. Das Rückstellelement ist zur Kraftbeaufschlagung der Signaleinrichtung zur Rückstellung einer Bewegung der Signaleinrichtung, insbesondere von einer Auslösestellung in eine Ausgangsstellung, zu der Veränderung des Signalzustands der Signaleinrichtung ausgebildet bzw. konfiguriert. Dies ermöglicht, dass bei bzw. in Folge einem/s Loslassen/s der bewegten Signaleinrichtung, insbesondere mittelbar oder unmittelbar, durch den Benutzer die Veränderung des Signalzustands benutzerausgelöst sein und/oder werden kann. Insbesondere kann das Rückstellelement eine Feder aufweisen, insbesondere sein.

In einer Weiterbildung der Erfindung umfasst bzw. weist die Signaleinrichtung einen, insbesondere elektrischen, Schalter auf. Der Signalzustand ist ein, insbesondere elektrischer, Schaltzustand des Schalters. Insbesondere kann der Schalter selbstrückstellend ausgebildet sein.

In einer Weiterbildung der Erfindung umfasst bzw. weist das Fahrantriebssystem mindestens, insbesondere nur, eine, insbesondere einzige, Radantriebswelle auf. Die Kupplung ist, insbesondere mit einem jeweiligen Teil, antriebsseitig mit dem Elektromotorantriebssystem und abtriebsseitig mit der mindestens einen Radantriebswelle, insbesondere mechanisch und/oder unmittelbar, wirkverbunden, insbesondere drehverbunden. Insbesondere braucht oder kann die, insbesondere ausgekuppelte, Kupplung durch Drehen, insbesondere Vorwärtsdrehen und/oder Rückwärtsdrehen, insbesondere eines Teils der Kupplung, mittels der Radantriebswelle nicht zum, insbesondere selbsttätigen, Einkuppeln ausgebildet sein.

In einer Ausgestaltung der Erfindung umfasst bzw. weist das Fahrantriebssystem mindestens, insbesondere genau, zwei Radantriebswellen auf. Die Kupplung umfasst bzw. weist, insbesondere nur, eine, insbesondere einzige, Klauenkupplung und/oder, insbesondere nur, eine, insbesondere einzige, Schrägflächen-Betätigungsmechanik je Radantriebswelle auf. Dies ermöglicht verschiedene Raddrehzahlen, insbesondere verschiedene Werte der Raddrehzahlen, der Radantriebswellen, wie z.B. bei bzw. für eine/r Kurvenfahrt des Gartengeräts.

Das erfindungsgemäße Gartengerät umfasst bzw. weist ein, insbesondere das, Fahrantriebssystem auf. Das Fahrantriebssystem umfasst bzw. weist eine, insbesondere die, Kupplung, ein, insbesondere das, Elektromotorantriebssystem, eine, insbesondere die, benutzerauslösbare Signaleinrichtung und eine, insbesondere elektrische, Steuer- bzw. Kontroll- bzw. Betriebseinrichtung auf. Die Kupplung ist durch Vorwärtsdrehen zum selbsttätigen Einkuppeln zum Vorwärtstreiben des Gartengeräts und durch Rückwärtsdrehen zum selbsttätigen Auskuppeln zum Freilauf des Gartengeräts ausgebildet bzw. konfiguriert. Das Elektromotorantriebssystem ist zum Vorwärtsdrehen und zum Rückwärtsdrehen der Kupplung ausgebildet bzw. konfiguriert. Die Steuereinrichtung ist benutzerausgelöst durch eine, insbesondere die, Veränderung eines, insbesondere des, Signalzustands der Signaleinrichtung zum, insbesondere automatischen, Betreiben des Elektromotorantriebssystems in einem, insbesondere dem, Auslauf- und/oder Brems-Betriebsmodus zum Erniedrigen einer, insbesondere der, Motordrehzahl des vorwärtsdrehenden Elektromotorantriebssystems ausgebildet bzw. konfiguriert. Des Weiteren ist die Steuereinrichtung zum, insbesondere automatischen, Erfassen, ob eine, insbesondere die, gegenelektromotorische Kraft verursacht durch das Elektromotorantriebssystem oder eine, insbesondere die, auf der gegenelektromotorischen Kraft basierende Größe ein, insbesondere das, Stillstands-Kriterium erfüllt, ausgebildet bzw. konfiguriert. Das Stillstands-Kriterium ist für ein, insbesondere das, Erreichen eines, insbesondere des, Stillstands des Elektromotorantriebssystems charakteristisch. Außerdem ist die Steuereinrichtung, falls das Stillstands-Kriterium erfüllt ist, zum, insbesondere automatischen, Betreiben des Elektromotorantriebssystems in einem, insbesondere dem, Rückwärtsdreh-Betriebsmodus zum Rückwärtsdrehen des Elektromotorantriebssystems zum Auskuppeln der Kupplung zum Freilauf des Gartengeräts ausgebildet bzw. konfiguriert. Das Stillstands-Kriterium ist, dass die gegenelektromotorische Kraft oder die auf der gegenelektromotorischen Kraft basierende Größe gleich oder kleiner als ein, insbesondere der, Stillstands-Obergrenzwert ist.

Das Gartengerät kann den/die gleichen Vorteile wie für das Verfahren zuvor beschrieben ermöglichen.

Insbesondere kann das Gartengerät, insbesondere die Steuereinrichtung, zum, insbesondere automatischen, Ausführen eines, insbesondere des, Verfahrens wie vorhergehend beschrieben ausgebildet bzw. konfiguriert sein. Zusätzlich oder alternativ kann das Gartengerät, insbesondere können/kann das Fahrantriebssystem und/oder die Kupplung, das Elektromotorantriebssystem und/oder die Signaleinrichtung, insbesondere jeweils, wie zuvor für das Verfahren beschrieben ausgebildet bzw. konfiguriert sein. Weiter zusätzlich oder alternativ kann die Steuereinrichtung einen Mikrocontroller aufweisen, insbesondere sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Gartengeräts,
- Fig. 2: eine schematische Ansicht, insbesondere ein Schaltschema, des Gartengeräts der Fig. 1,
- Fig. 3: eine Kupplung eines Fahrantriebssystems des Gartengeräts der Fig. 1 eingekuppelt,
- Fig. 4: die Kupplung der Fig. 3 ausgekuppelt, und
- Fig. 5: ein Ablaufdiagramm eines erfindungsgemäßen Verfahrens zum Betreiben des Gartengeräts der Fig. 1, insbesondere einen Graphen einer Motordrehzahl und eines Motorstroms eines Elektromotorantriebssystems des Fahrantriebssystems des Gartengeräts über der Zeit.

### DETAILLIERTE BESCHREIBUNG DER AUSFÜHRUNGSBEISPIELE

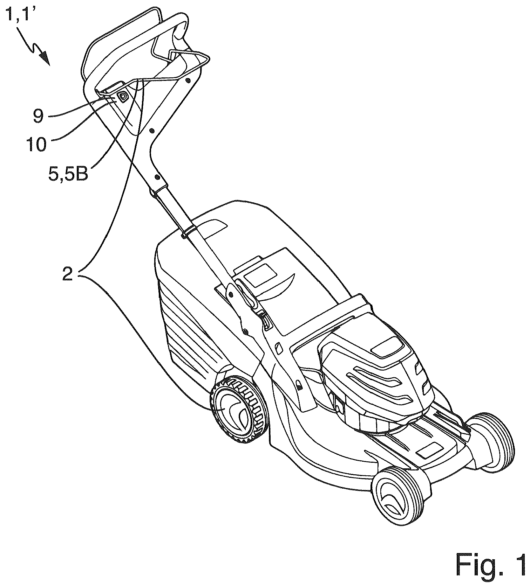

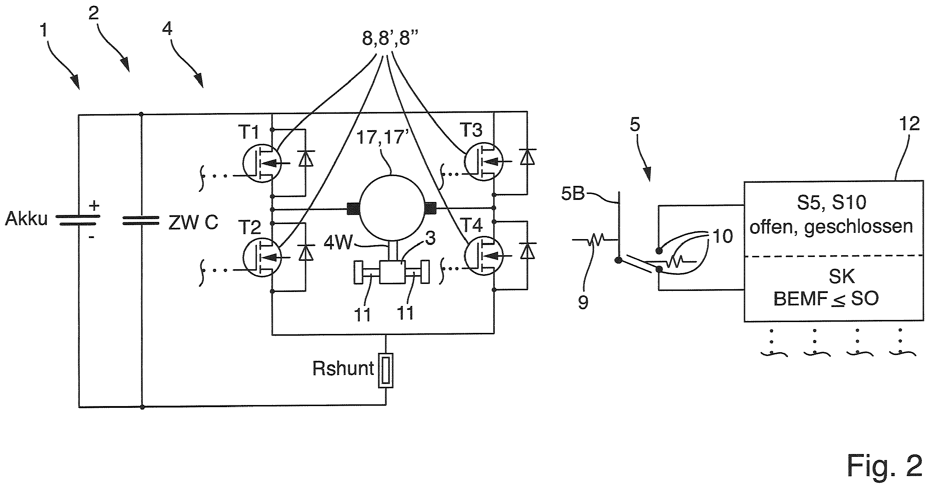

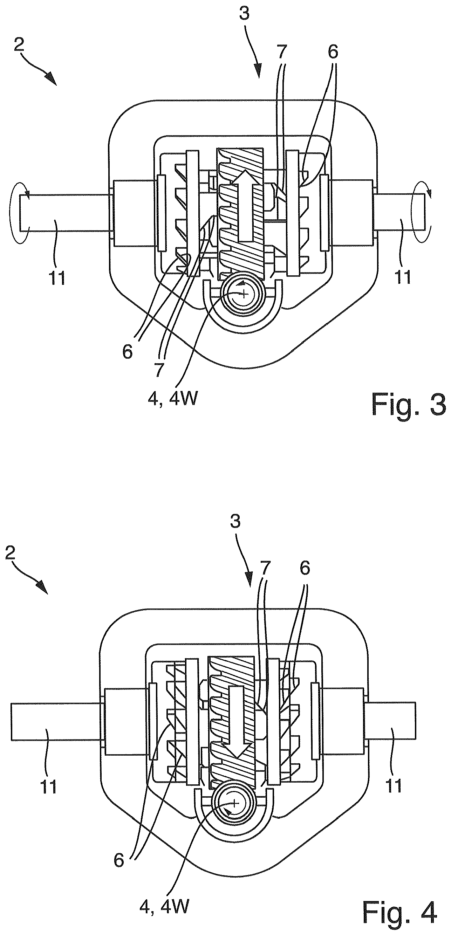

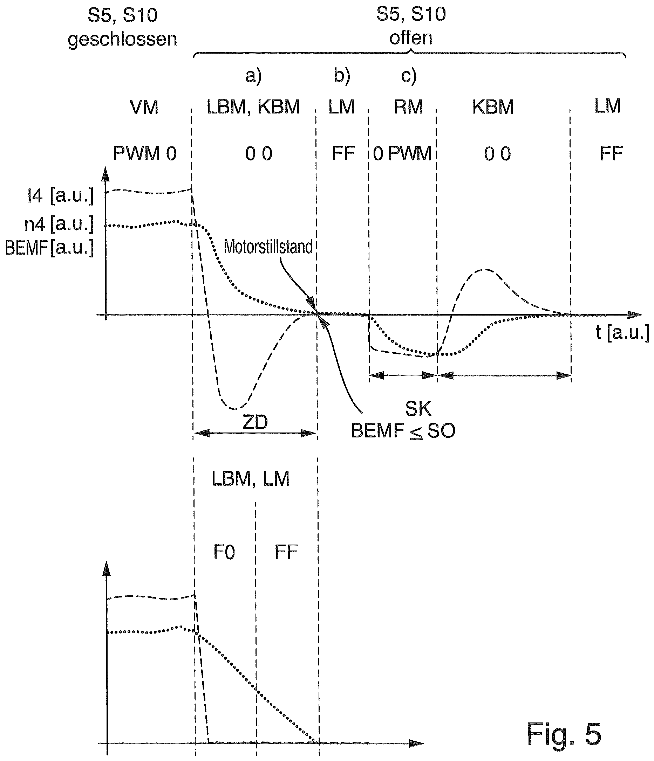

Fig. 1 und 2 zeigen ein erfindungsgemäßes Gartengerät 1. Das Gartengerät 1 weist ein Fahrantriebssystem 2 auf. Das Fahrantriebssystem 2 weist ein Kupplung 3, ein Elektromotorantriebssystem 4, eine benutzerauslösbare Signaleinrichtung 5 und eine Steuereinrichtung 12 auf. Die Kupplung 2 ist durch Vorwärtsdrehen zum selbsttätigen Einkuppeln zum Vorwärtstreiben des Gartengeräts 1, wie in Fig. 3 durch Pfeile gezeigt, und durch Rückwärtsdrehen zum selbsttätigen Auskuppeln zum Freilauf des Gartengeräts 1, wie in Fig. 4 durch Pfeile gezeigt, ausgebildet. Das Elektromotorantriebssystem 4 ist zum Vorwärtsdrehen, wie in Fig. 3 gezeigt, und zum Rückwärtsdrehen, wie in Fig. 4 gezeigt, der Kupplung 3 ausgebildet. Die Steuereinrichtung 12 ist benutzerausgelöst durch eine Veränderung eines Signalzustands S5 der Signaleinrichtung 5, in dem gezeigten Ausführungsbeispiel von geschlossen zu offen, zum Betreiben des Elektromotorantriebssystems 4 in einem Auslauf- und/oder Brems-Betriebsmodus LBM zum Erniedrigen einer Motordrehzahl n4 des vorwärtsdrehenden Elektromotorantriebssystems 4 ausgebildet, wie in Fig. 5 links gezeigt. Des Weiteren ist die Steuereinrichtung 12 zum Erfassen, ob eine gegenelektromotorische Kraft BEMF verursacht durch das Elektromotorantriebssystem 4 oder eine der gegenelektromotorischen Kraft basierende Größe ein Stillstands-Kriterium SK erfüllt, ausgebildet, wie in Fig. 5 mittig gezeigt. Das Stillstands-Kriterium SK ist für ein Erreichen eines Stillstands des Elektromotorantriebssystems 4 charakteristisch. Außerdem ist die Steuereinrichtung 12, falls das Stillstands-Kriterium SK erfüllt ist, zum Betreiben des Elektromotorantriebssystems 4 in einem Rückwärtsdreh-Betriebsmodus RM zum Rückwärtsdrehen des Elektromotorantriebssystems 4 zum Auskuppeln der Kupplung 3 zum Freilauf des Gartengeräts 1 ausgebildet, wie in Fig. 5 rechts gezeigt.

Fig. 5 zeigt ein erfindungsgemäßes Verfahren zum Betreiben des Gartengeräts 1. Das Gartengerät 1 weist das Fahrantriebssystem 2 auf. Das Fahrantriebssystem 2 weist die Kupplung 3, das Elektromotorantriebssystem 4 und die benutzerauslösbare Signaleinrichtung 5 auf. Die Kupplung 3 ist durch Vorwärtsdrehen zum selbsttätigen Einkuppeln zum Vorwärtstreiben des Gartengeräts 1 und durch Rückwärtsdrehen der Kupplung zum selbsttätigen Auskuppeln zum Freilauf des Gartengeräts 1 ausgebildet. Das Elektromotorantriebssystem 4 ist zum Vorwärtsdrehen und zum Rückwärtsdrehen der Kupplung 3 ausgebildet. Das Verfahren weist die Schritte auf: a) benutzerausgelöst durch die Veränderung des Signalzustands S5 der Signaleinrichtung 5 Betreiben des Elektromotorantriebssystems 4 in dem Auslauf- und/oder Brems-Betriebsmodus LBM zum Erniedrigen der Motordrehzahl n4 des vorwärtsdrehenden Elektromotorantriebssystems 4, insbesondere mittels der Steuereinrichtung 12. b) Erfassen, ob die gegenelektromotorische Kraft BEMF verursacht durch das Elektromotorantriebssystem 4 oder die auf der gegenelektromotorischen Kraft basierende Größe das Stillstands-Kriterium SK erfüllt, insbesondere mittels der Steuereinrichtung 12. Das Stillstands-Kriterium SK ist für das Erreichen des Stillstands des Elektromotorantriebssystems 4 charakteristisch. c) Falls das Stillstands-Kriterium SK erfüllt ist, Betreiben des Elektromotorantriebssystems 4 in dem Rückwärtsdreh-Betriebsmodus RM zum Rückwärtsdrehen des Elektromotorantriebssystems 4 zum Auskuppeln der Kupplung 3 zum Freilauf des Gartengeräts 1, insbesondere mittels der Steuereinrichtung 12.

Im Detail ist das Gartengerät 1 ein Rasenmäher 1'.

Des Weiteren weist die Kupplung 3 mindestens eine Klauenkupplung 6, in dem gezeigten Ausführungsbeispiel zwei Klauenkupplungen 6, auf. Die Klauenkupplung 6 ist durch Rückwärtsdrehen zum selbsttätigen Auskuppeln ausgebildet, insbesondere dreht rückwärts und kuppelt selbsttätig aus, wie in Fig. 4 gezeigt.

Zusätzlich oder alternativ weist die Kupplung 3 mindestens eine Schrägflächen-Betätigungsmechanik 7, in dem gezeigten Ausführungsbeispiel zwei Schrägflächen-Betätigungsmechaniken 7, auf. Die Schrägflächen-Betätigungsmechanik 7 ist, insbesondere zum Rückwärtsdrehen der Klauenkupplung 6 und, durch Vorwärtsdrehen zum selbsttätigen Einkuppeln, insbesondere der Klauenkupplung 6, ausgebildet, insbesondere dreht die Klauenkupplung 6 rückwärts, wie in Fig. 4 gezeigt, und dreht vorwärts und kuppelt die Klauenkupplung 6 selbsttätig ein, wie in Fig. 3 gezeigt.

Außerdem weist das Fahrantriebssystem 2 mindestens eine Radantriebswelle 11, in dem gezeigten Ausführungsbeispiel zwei Radantriebswellen 11, auf. Die Kupplung 3 ist antriebsseitig mit dem Elektromotorantriebssystem 4 und abtriebsseitig mit der mindestens einen Radantriebswelle 11 wirkverbunden.

Im Detail weist das Fahrantriebssystem 2 zwei Radantriebswellen 11 auf. Die Kupplung 3 weist eine Klauenkupplung 6 und/oder eine Schrägflächen-Betätigungsmechanik 7 je Radantriebswelle 11 auf.

In alternativen Ausführungsbeispielen kann die Kupplung nur eine einzige Klauenkupplung und/oder nur eine einzige Schrägflächen-Betätigungsmechanik aufweisen. Insbesondere kann das Fahrantriebssystem ein Differentialgetriebe aufweisen und die Kupplung kann abtriebsseitig mit den zwei Radantriebswellen mittels des Differentialgetriebes wirkverbunden, insbesondere drehverbunden, sein. Zusätzlich oder alternativ kann in alternativen Ausführungsbeispielen das Fahrantriebssystem nur eine einzige, insbesondere durchgehende, Radantriebswelle aufweisen.

In dem gezeigten Ausführungsbeispiel ist die mindestens eine Schrägflächen-Betätigungsmechanik 7 der Kupplung 3 mit dem Elektromotorantriebssystem 4, insbesondere einer Motorantriebswelle 4W des Elektromotorantriebssystems 4, insbesondere unmittelbar, wirkverbunden. Die mindestens eine Schrägflächen-Betätigungsmechanik 7 ist mit der, insbesondere jeweiligen bzw. zugeordneten, Klauenkupplung 6 der Kupplung 3, insbesondere unmittelbar, wirkverbunden. Die mindestens eine Klauenkupplung 6 ist mit der mindestens einen, insbesondere jeweiligen bzw. zugeordneten, Radantriebswelle 11, insbesondere unmittelbar, wirkverbunden.

In anderen Worten: die mindestens eine Radantriebswelle 11 ist mittels der bzw. über die Kupplung 3 eingekuppelt, insbesondere und nicht ausgekuppelt, mit dem Elektromotorantriebssystem 4, insbesondere der Motorantriebswelle 4W, wirkverbunden, insbesondere drehverbunden.

Im Übrigen wird bezüglich der Klauenkupplung 6, insbesondere einer Funktion, insbesondere einer Ausspur-Funktion, einer Abschrägung der Klauenkupplung 6 zum selbsttätigen Auskuppeln durch Rückwärtsdrehen, und/oder der Schrägflächen-Betätigungsmechanik 7 auf die Fachliteratur verwiesen.

Weiter weist in dem gezeigten Ausführungsbeispiel das Fahrantriebssystem 2, insbesondere mit der mindestens einen Radantriebswelle 11 drehfestverbundene, Räder, insbesondere zwei Räder, auf. Insbesondere ist das Elektromotorantriebssystem 4 zum Antrieb der Räder ausgebildet. Im Übrigen weist in dem gezeigten Ausführungsbeispiel das Gartengerät 1 andere, insbesondere nicht angetriebene, Räder auf.

In alternativen Ausführungsbeispielen, insbesondere falls das Fahrantriebssystem nur eine einzige Radantriebswelle aufweist, kann das Gartengerät mindestens eine Raddrehzahl- bzw. Kurvenfahrteinrichtung, insbesondere mindestens zwei Raddrehzahl- bzw. Kurvenfahrteinrichtungen, aufweisen, insbesondere antriebsseitig mit der Kupplung und/oder der Radantriebswelle, insbesondere unmittelbar, wirkverbunden und/oder abtriebsseitig mit den, insbesondere angetriebenen, Rädern, insbesondere dem jeweiligen bzw. zugeordneten Rad, insbesondere unmittelbar, wirkverbunden. Dies kann verschiedene Raddrehzahlen der Räder ermöglichen, wie z.B. bei bzw. für eine/r Kurvenfahrt des Gartengeräts.

Zudem weist das Verfahren, insbesondere zeitlich vor dem Schritt a), den Schritt auf: benutzerausgelöst durch eine andere Veränderung eines, in dem gezeigten Ausführungsbeispiel des, Signalzustands S5 der Signaleinrichtung 5, in dem gezeigten Ausführungsbeispiel von offen zu geschlossen, Betreiben des Elektromotorantriebssystems 4 in einem Vorwärtsdreh-Betriebsmodus VM zum Vorwärtsdrehen, insbesondere zum Erhöhen der Motordrehzahl n4, des Elektromotorantriebssystems 4, insbesondere zum Einkuppeln der Kupplung 3 und, zum Vorwärtstreiben des Gartengeräts 1, wie in 5 links gezeigt, insbesondere mittels der Steuereinrichtung 12.

Des Weiteren ist die benutzerauslösbare Signaleinrichtung 5 benutzerbeweglich, insbesondere zu der anderen Veränderung des Signalzustands S5 der Signaleinrichtung 5, ausgebildet, wie in Fig. 1 und 2 gezeigt. Das Fahrantriebssystem 2 weist ein Rückstellelement 9 auf. Das Rückstellelement 9 ist zur Kraftbeaufschlagung der Signaleinrichtung 5 zur Rückstellung einer Bewegung der Signaleinrichtung 5 zu der Veränderung des Signalzustands S5 der Signaleinrichtung 5 ausgebildet, insbesondere beaufschlagt.

Insbesondere weist die Signaleinrichtung 5 ein benutzerbewegliches Bedienelement 5B. Das Rückstellelement 9 ist zur Kraftbeaufschlagung des Bedienelements 5B zur Rückstellung einer Bewegung des Bedienelements 5B zu der Veränderung des Signalzustands S5 der Signaleinrichtung 5 ausgebildet, insbesondere beaufschlagt.

In dem gezeigten Ausführungsbeispiel ist das Bedienelement 5B in Form eines Bügels. In alternativen Ausführungsbeispielen kann das Bedienelement in anderer Form, wie z.B. in Form einer Drucktaste, sein.

Außerdem weist die Signaleinrichtung 5 einen Schalter 10 auf. Der Signalzustand S5 ist ein Schaltzustand S10 des Schalters 10.

In dem gezeigten Ausführungsbeispiel ist das Bedienelement 5B durch die Bewegung zur Betätigung des Schalters 10, insbesondere zu der anderen Veränderung des Signalzustands S5 der Signaleinrichtung 5 bzw. des Schaltzustands S10 des Schalters 10, ausgebildet, insbesondere betätigt den Schalter 10. Weiter ist das Rückstellelement 9 zur Kraftbeaufschlagung der Signaleinrichtung 5 bzw. des Bedienelements 5B zur Rückstellung der Bewegung der Signaleinrichtung 5 bzw. des Bedienelements zu der Veränderung des Signalzustands S5 der Signaleinrichtung 5 bzw. des Schaltzustands S10 des Schalters 10 ausgebildet, insbesondere beaufschlagt. Zudem ist der Schalter 10 selbstrückstellend, insbesondere von dem Schaltzustand S10 geschlossen zu dem Schaltzustand S10 offen, ausgebildet.

Des Weiteren weist in dem gezeigten Ausführungsbeispiel das Verfahren, insbesondere zeitlich vor dem Schritt a), den Schritt auf: Erfassen, insbesondere automatisches Erfassen, bzw. Detektieren, insbesondere Überwachen, der, insbesondere benutzerausgelösten, Veränderung, insbesondere und/oder der anderen Veränderung, des Signalzustands S5 der Signaleinrichtung 5 bzw. des Schaltzustands S10 des Schalters 10, insbesondere mittels der Steuereinrichtung 12.

Außerdem weist das Elektromotorantriebssystem 4 einen Gleichstrommotor 17, in dem gezeigten Ausführungsbeispiel einen Permanentmagnet-Gleichstrommotor 17', auf. Der Gleichstrommotor 17 ist zum Vorwärtsdrehen und zum Rückwärtsdrehen der Kupplung 3 ausgebildet, insbesondere dreht die Kupplung 3 vorwärts oder rückwärts.

Weiter weist das Elektromotorantriebssystem 4 eine Brückenschaltung 8, in dem gezeigten Ausführungsbeispiel eine Voll-Brückenschaltung 8', insbesondere einen Vierquadrantensteller 8", zum Betreiben des Elektromotorantriebssystems 4, in dem gezeigten Ausführungsbeispiel aufweisend den Gleichstrommotor 17, in mindestens dem Auslauf- und/oder Brems-Betriebsmodus LBM und dem Rückwärtsdreh-Betriebsmodus RM auf, insbesondere mittels der Steuereinrichtung 12.

Im Detail weist der Vierquadrantensteller 8" eine elektronische H-Brückenschaltung aufweisend vier Halbleiterschalter, in dem gezeigten Ausführungsbeispiel Transistoren T1, T2, T3, T4, auf. In anderen Worten: der Vierquadrantensteller 8" weist zweimal zwei in Reihe bzw. seriell geschaltete Transistoren T1, T2, T3, T4 mit jeweils einer Freilaufdiode in Sperrpolung auf. In der Mitte zwischen den beiden Hälften bzw. Halbbrücken liegt der zu betreibende bzw. zu steuernde Gleichstrommotor 17.

Eine jeweilige Halbbrücke bzw. die Transistoren T1 und T2 sowie die Transistoren T3 und T4, insbesondere jeweils, können wie z.B. folgt betrieben bzw. gesteuert bzw. geschalten werden, insbesondere mittels der Steuereinrichtung 12:
- PWM-Signal (Pulsweitenmodulation) -> PWM-Zustand;
- Highside (T1 oder T3) An-Zustand und Lowside (T2 oder T4) Aus-Zustand -> 1-Zustand;
- Highside (T1 oder T3) Aus-Zustand und Lowside (T2 oder T4) An-Zustand -> 0-Zustand;
- Highside (T1 oder T3) Aus-Zustand und Lowside (T2 oder T4) Aus-Zustand -> F-Zustand.

Im Übrigen wird der Brückenschaltung 8, insbesondere der Voll-Brückenschaltung 8', insbesondere des Vierquadrantenstellers 8", insbesondere einer Funktion und/oder eines Betreibens bzw. eines Steuerns der Brückenschaltung 8, auf die Fachliteratur verwiesen.

Zudem ist in dem Schritt a) der Brems-Betriebsmodus BM ein Kurzschluss-Brems-Betriebsmodus KBM, wie in Fig. 5 oben gezeigt.

Alternativ wird in dem Schritt a) das Elektromotorantriebssystem 4 in dem Auslauf-Betriebsmodus LM betrieben, wie in Fig. 5 unten gezeigt.

Weiter zusätzlich oder alternativ wird der Schritt b) zeitlich nach dem Schritt a) ausgeführt, insbesondere mittels der Steuereinrichtung 12.

Zudem wird in dem gezeigten Ausführungsbeispiel der Schritt c) zeitlich nach dem Schritt b) ausgeführt, insbesondere mittels der Steuereinrichtung 12.

Des Weiteren wird der Schritt a) für eine vorgegebene Zeitdauer ZD, insbesondere abhängig von einer letzten Motordrehzahl n4 oder einer letzten der letzten Motordrehzahl n4 korrespondierenden Größe, wie z.B. ein Motorstrom I4 des Elektromotorantriebssystems 4, zeitlich vor dem Schritt a), ausgeführt, insbesondere mittels der Steuereinrichtung 12.

Außerdem werden/wird in dem gezeigten Ausführungsbeispiel der Schritt b) und/oder der Schritt c), insbesondere jeweils, für eine, insbesondere fest, vorgegebene Zeitdauer ausgeführt, insbesondere mittels der Steuereinrichtung 12. Zusätzlich oder alternativ kann der Schritt c) ausgeführt werden, falls bzw. wenn bzw. sobald das Stillstands-Kriterium SK erfüllt ist.

Weiter weist der Schritt b) auf: Betreiben des Elektromotorantriebssystems 4 in dem Auslauf-Betriebsmodus LM, insbesondere mittels der Steuereinrichtung 12.

Zudem ist das Stillstands-Kriterium SK, dass die gegenelektromotorische Kraft BEMF oder die auf der gegenelektromotorischen Kraft basierende Größe gleich oder kleiner als ein Stillstands-Obergrenzwert SO ist.

In dem gezeigten Ausführungsbeispiel wird der Stillstand des Elektromotorantriebssystems 4 zeitlich mit einem Ende des Schritts a) erreicht. In alternativen Ausführungsbeispielen kann der Stillstand des Elektromotorantriebssystems zeitlich vor dem Ende bzw. während des Schritts a) oder zeitlich nach dem Ende des Schritts a) bzw. während oder zeitlich mit einem Ende des Schritts b) erreicht werden.

Im Detail werden zeitlich vor dem Schritt a) bzw. in dem Vorwärtsdreh-Betriebsmodus VM die Transistoren T1 und T2 in dem PWM-Zustand sowie die Transistoren T3 und T4 in dem 0-Zustand betrieben.

Des Weiteren werden in dem Schritt a) in dem Kurzschluss-Brems-Betriebsmodus KBM die Transistoren T1 und T2 in dem 0-Zustand sowie die Transistoren T3 und T4 in dem 0-Zustand betrieben.

Alternativ werden in dem Schritt a) in dem Auslauf-Betriebsmodus LM die Transistoren T1 und T2 in dem F-Zustand sowie die Transistoren T3 und T4 in dem F-Zustand betrieben.

Insbesondere wird in dem gezeigten Ausführungsbeispiel in dem Schritt a) zeitlich vor dem Auslauf-Betriebsmodus LM der Motorstrom I4 abgebaut, insbesondere werden die Transistoren T1 und T2 in dem F-Zustand sowie die Transistoren T3 und T4 in dem 0-Zustand betrieben, insbesondere für eine vorgegebene Zeitdauer.

Außerdem werden in dem Schritt b) in dem Auslauf-Betriebsmodus LM die Transistoren T1 und T2 in dem F-Zustand sowie die Transistoren T3 und T4 in dem F-Zustand betrieben.

Weiter werden in dem Schritt c) in dem Rückwärtsdreh-Betriebsmodus RM die Transistoren T1 und T2 in dem 0-Zustand sowie die Transistoren T3 und T4 in dem PWM-Zustand betrieben, insbesondere für eine vorgegebene Zeitdauer.

Insbesondere wird in dem gezeigten Ausführungsbeispiel in dem Schritt c) zeitlich nach dem Rückwärtsdreh-Betriebsmodus RM das, insbesondere rückwärtsdrehende, Elektromotorantriebssystem 4 in dem Kurzschluss-Brems-Betriebsmodus KBM betrieben, insbesondere werden die Transistoren T1 und T2 in dem 0-Zustand sowie die Transistoren T3 und T4 in dem 0-Zustand betrieben, insbesondere für eine vorgegebene Zeitdauer.

Dann ist das Verfahren beendet bzw. das, insbesondere stillstehende, Elektromotorantriebssystem 4 wird in dem Auslauf-Betriebsmodus LM betrieben, insbesondere werden die Transistoren T1 und T2 in dem F-Zustand sowie die Transistoren T3 und T4 in dem F-Zustand betrieben.

Somit ist das Fahrantriebssystem 2, insbesondere das Elektromotorantriebssystem 4, startbereit und/oder die Kupplung 3 ist ausgekuppelt, insbesondere zum Freilauf des Gartengeräts 1.

Des Weiteren weist in dem gezeigten Ausführungsbeispiel das Gartengerät, insbesondere das Elektromotorantriebssystem 4, eine, insbesondere auswechselbare, Antriebsspannungsquelle auf. Insbesondere weist die Antriebsspannungsquelle einen Akkumulator Akku auf, insbesondere ist der Akkumulator Akku.

Im Übrigen ist in dem gezeigten Ausführungsbeispiel die Steuereinrichtung 12 zum Zusammenwirken mit dem Elektromotorantriebssystem 4, insbesondere der Brückenschaltung 8, und der Signaleinrichtung 5, insbesondere dem Schalter 10, ausgebildet, wie in Fig. 1 durch gestrichelte und durchgezogene Linien gezeigt.

Wie die gezeigten und oben erläuterten Ausführungsbeispiele deutlich machen, stellt die Erfindung ein vorteilhaftes Verfahren zum Betreiben eines Gartengeräts und ein vorteilhaftes Gartengerät bereit, das jeweils verbesserte Eigenschaften aufweist, insbesondere eine hohe Benutzerfreundlichkeit und/oder eine lange Lebensdauer des Gartengeräts ermöglicht.

## Patentansprüche

1. Verfahren zum Betreiben eines Gartengeräts (1),
- wobei das Gartengerät (1) ein Fahrantriebssystem (2) aufweist,
- wobei das Fahrantriebssystem (2) eine Kupplung (3), ein Elektromotorantriebssystem (4) und eine benutzerauslösbare Signaleinrichtung (5) aufweist,
- wobei die Kupplung (3) durch Vorwärtsdrehen zum selbsttätigen Einkuppeln zum Vorwärtstreiben des Gartengeräts (1) und durch Rückwärtsdrehen zum selbsttätigen Auskuppeln zum Freilauf des Gartengeräts (1) ausgebildet ist, und
- wobei das Elektromotorantriebssystem (4) zum Vorwärtsdrehen und zum Rückwärtsdrehen der Kupplung (3) ausgebildet ist, und
- wobei das Verfahren die Schritte aufweist:
a) benutzerausgelöst durch eine Veränderung eines Signalzustands (S5) der Signaleinrichtung (5) Betreiben des Elektromotorantriebssystems (4) in einem Auslauf- und/oder Brems-Betriebsmodus (LBM) zum Erniedrigen einer Motordrehzahl (n4) des vorwärtsdrehenden Elektromotorantriebssystems (4),
b) Erfassen, ob eine gegenelektromotorische Kraft (BEMF) verursacht durch das Elektromotorantriebssystem (4) oder eine auf der gegenelektromotorischen Kraft basierende Größe ein Stillstands-Kriterium (SK) erfüllt, wobei das Stillstands-Kriterium (SK) für ein Erreichen eines Stillstands des Elektromotorantriebssystems (4) charakteristisch ist, und
c) , falls das Stillstands-Kriterium (SK) erfüllt ist, Betreiben des Elektromotorantriebssystems (4) in einem Rückwärtsdreh-Betriebsmodus (RM) zum Rückwärtsdrehen des Elektromotorantriebssystems (4) zum Auskuppeln der Kupplung (3) zum Freilauf des Gartengeräts (1),
- **dadurch gekennzeichnet, dass** das Stillstands-Kriterium (SK) ist, dass die gegenelektromotorische Kraft (BEMF) oder die auf der gegenelektromotorischen Kraft basierende Größe gleich oder kleiner als ein Stillstands-Obergrenzwert (SO) ist.

2. Verfahren nach Anspruch 1,
- wobei das Gartengerät (1) ein Rasenmäher (1') ist.

3. Verfahren nach einem der vorhergehenden Ansprüche,
- wobei die Kupplung (3) mindestens eine Klauenkupplung (6) aufweist, wobei die Klauenkupplung (6) durch Rückwärtsdrehen zum selbsttätigen Auskuppeln ausgebildet ist, und/oder
- wobei die Kupplung (3) mindestens eine Schrägflächen-Betätigungsmechanik (7) aufweist, wobei die Schrägflächen-Betätigungsmechanik (7), durch Vorwärtsdrehen zum selbsttätigen Einkuppeln, ausgebildet ist.

4. Verfahren nach einem der vorhergehenden Ansprüche,
- wobei das Elektromotorantriebssystem (4) einen Gleichstrommotor (17), aufweist, wobei der Gleichstrommotor (17) zum Vorwärtsdrehen und zum Rückwärtsdrehen der Kupplung (3) ausgebildet ist.

5. Verfahren nach einem der vorhergehenden Ansprüche, insbesondere nach Anspruch 4, wobei das Elektromotorantriebssystem (4) eine Brückenschaltung (8), zum Betreiben des Elektromotorantriebssystems (4), insbesondere aufweisend den Gleichstrommotor (17), in mindestens dem Auslauf- und/oder Brems-Betriebsmodus (LBM) und dem Rückwärtsdreh-Betriebsmodus (RM) aufweist.

6. Verfahren nach einem der vorhergehenden Ansprüche,
- wobei in dem Schritt a) der Brems-Betriebsmodus (BM) ein Kurzschluss-Brems-Betriebsmodus (KBM) ist, und/oder
- wobei der Schritt b) zeitlich nach dem Schritt a) ausgeführt wird.

7. Verfahren nach einem der vorhergehenden Ansprüche,
- wobei der Schritt a) für eine vorgegebene Zeitdauer (ZD), ausgeführt wird.

8. Verfahren nach einem der vorhergehenden Ansprüche,
- wobei der Schritt b) aufweist: Betreiben des Elektromotorantriebssystems (4) in dem Auslauf-Betriebsmodus (LM).

9. Verfahren nach einem der vorhergehenden Ansprüche,
- wobei das Verfahren, den Schritt aufweist: benutzerausgelöst durch eine andere Veränderung eines Signalzustands (S5) der Signaleinrichtung (5) Betreiben des Elektromotorantriebssystems (4) in einem Vorwärtsdreh-Betriebsmodus (VM) zum Vorwärtsdrehen, des Elektromotorantriebssystems (4), zum Vorwärtstreiben des Gartengeräts (1).

10. Verfahren nach einem der vorhergehenden Ansprüche,
- wobei die benutzerauslösbare Signaleinrichtung (5) benutzerbeweglich, ausgebildet ist, und
- wobei das Fahrantriebssystem (2) ein Rückstellelement (9) aufweist, wobei das Rückstellelement (9) zur Kraftbeaufschlagung der Signaleinrichtung (5) zur Rückstellung einer Bewegung der Signaleinrichtung (5) zu der Veränderung des Signalzustands (S5) der Signaleinrichtung (5) ausgebildet ist.

11. Verfahren nach einem der vorhergehenden Ansprüche,
- wobei die Signaleinrichtung (5) einen Schalter (10) aufweist,
- wobei der Signalzustand (S5) ein Schaltzustand (S10) des Schalters (10) ist.

12. Verfahren nach einem der vorhergehenden Ansprüche,
- wobei das Fahrantriebssystem (2) mindestens eine Radantriebswelle (11) aufweist,
- wobei die Kupplung (3) antriebsseitig mit dem Elektromotorantriebssystem (4) und abtriebsseitig mit der mindestens einen Radantriebswelle (11) wirkverbunden ist.

13. Verfahren nach Ansprüchen 3 und 12,
- wobei das Fahrantriebssystem (2) mindestens zwei Radantriebswellen (11) aufweist, und
- wobei die Kupplung (3) eine Klauenkupplung (6) und/oder eine Schrägflächen-Betätigungsmechanik (7) je Radantriebswelle (11) aufweist.

14. Gartengerät (1), zum Ausführen eines Verfahrens nach einem der vorhergehenden Ansprüche,
- wobei das Gartengerät (1) ein Fahrantriebssystem (2) aufweist,
- wobei das Fahrantriebssystem (2) eine Kupplung (3), ein Elektromotorantriebssystem (4), eine benutzerauslösbare Signaleinrichtung (5) und eine Steuereinrichtung (12) aufweist,
- wobei die Kupplung (3) durch Vorwärtsdrehen zum selbsttätigen Einkuppeln zum Vorwärtstreiben des Gartengeräts (1) und durch Rückwärtsdrehen zum selbsttätigen Auskuppeln zum Freilauf des Gartengeräts (1) ausgebildet ist,
- wobei das Elektromotorantriebssystem (4) zum Vorwärtsdrehen und zum Rückwärtsdrehen der Kupplung (3) ausgebildet ist, und
- wobei die Steuereinrichtung (12)
- benutzerausgelöst durch eine Veränderung eines Signalzustands (S5) der Signaleinrichtung (5) zum Betreiben des Elektromotorantriebssystems (4) in einem Auslauf- und/oder Brems-Betriebsmodus (LBM) zum Erniedrigen einer Motordrehzahl (n4) des vorwärtsdrehenden Elektromotorantriebssystems (4),
- zum Erfassen, ob eine gegenelektromotorische Kraft (BEMF) verursacht durch das Elektromotorantriebssystem (4) oder eine auf der gegenelektromotorischen Kraft basierende Größe ein Stillstands-Kriterium (SK) erfüllt, wobei das Stillstands-Kriterium (SK) für ein Erreichen eines Stillstands des Elektromotorantriebssystems (4) charakteristisch ist, und
- , falls das Stillstands-Kriterium (SK) erfüllt ist, zum Betreiben des Elektromotorantriebssystems (4) in einem Rückwärtsdreh-Betriebsmodus (RM) zum Rückwärtsdrehen des Elektromotorantriebssystems (4) zum Auskuppeln der Kupplung (3) zum Freilauf des Gartengeräts (1) ausgebildet ist
- **dadurch gekennzeichnet, dass** das Stillstands-Kriterium (SK) ist, dass die gegenelektromotorische Kraft (BEMF) oder die auf der gegenelektromotorischen Kraft basierende Größe gleich oder kleiner als ein Stillstands-Obergrenzwert (SO) ist.

## Claims

1. Method for operating a gardening appliance (1),
- wherein the gardening appliance (1) has a traction drive system (2),
- wherein the traction drive system (2) has a clutch (3), an electric motor drive system (4) and a user-triggerable signalling device (5),
- wherein the clutch (3) is designed to, as a result of forward rotation, automatically engage for forward drive of the gardening appliance (1) and, as a result of backward rotation, automatically disengage for freewheeling of the gardening appliance (1), and
- wherein the electric motor drive system (4) is designed to effect the forward rotation and the backward rotation of the clutch (3), and
- wherein the method comprises the steps:
a) in a user-triggered manner by way of a change in a signal state (S5) of the signalling device (5), operating the electric motor drive system (4) in a running-down and/or braking operating mode (LBM) in order to lower a motor rotational speed (n4) of the forward-rotating electric motor drive system (4),
b) acquiring whether a back electromotive force (BEMF) caused by the electric motor drive system (4) or a variable based on the back electromotive force satisfies a standstill criterion (SK), wherein the standstill criterion (SK) is characteristic of an attainment of a standstill state of the electric motor drive system (4), and
c) if the standstill criterion (SK) is satisfied, operating the electric motor drive system (4) in a backward-rotation operating mode (RM) to effect the backward rotation of the electric motor drive system (4) for the purposes of disengaging the clutch (3) for freewheeling of the gardening appliance (1),
- **characterized in that** the standstill criterion (SK) is that the back electromotive force (BEMF) or the variable based on the back electromotive force is equal to or lower than a standstill upper threshold value (SO).

2. Method according to Claim 1,
- wherein the gardening appliance (1) is a lawnmower (1¹) .

3. Method according to either one of the preceding claims,
- wherein the clutch (3) has at least one dog clutch (6), wherein the dog clutch (6) is designed to automatically disengage as a result of backward rotation, and/or
- wherein the clutch (3) has at least one inclined-surface actuating mechanism (7), wherein the inclined-surface actuating mechanism (7) is designed to automatically engage as a result of forward rotation.

4. Method according to any one of the preceding claims,
- wherein the electric motor drive system (4) has a direct current motor (17), wherein the direct current motor (17) is designed to effect the forward rotation and the backward rotation of the clutch (3).

5. Method according to any one of the preceding claims, in particular according to Claim 4, wherein the electric motor drive system (4) has a bridge circuit (8) for operating the electric motor drive system (4), in particular having the direct current motor (17), in at least the running-down and/or braking operating mode (LBM) and the backward-rotation operating mode (RM).

6. Method according to any one of the preceding claims,
- wherein, in step a), the braking operating mode (BM) is a short-circuit braking operating mode (KBM), and/or
- wherein step b) is carried out at a time after step a).

7. Method according to any one of the preceding claims,
- wherein step a) is carried out for a specified time period (ZD).

8. Method according to any one of the preceding claims,
- wherein step b) comprises: operating the electric motor drive system (4) in the running-down operating mode (LM).

9. Method according to any one of the preceding claims,
- wherein the method has the step: in a user-triggered manner by way of another change in a signal state (S5) of the signalling device (5), operating the electric motor drive system (4) in a forward-rotation operating mode (VM) in order to effect the forward rotation of the electric motor drive system (4) for forward drive of the gardening appliance (1).

10. Method according to any one of the preceding claims,
- wherein the user-triggerable signalling device (5) is designed to be movable by the user, and
- wherein the traction drive system (2) has a resetting element (9), wherein the resetting element (9) is designed to apply force to the signalling device (5) in order to reset a movement of the signalling device (5) for the change in the signal state (S5) of the signalling device (5).

11. Method according to any one of the preceding claims,
- wherein the signalling device (5) has a switch (10),
- wherein the signal state (S5) is a switching state (S10) of the switch (10).

12. Method according to any one of the preceding claims,
- wherein the traction drive system (2) has at least one wheel drive shaft (11),
- wherein the clutch (3) is operatively connected on the drive side to the electric motor drive system (4) and on the output side to the at least one wheel drive shaft (11) .

13. Method according to Claims 3 and 12,
- wherein the traction drive system (2) has at least two wheel drive shafts (11), and
- wherein the clutch (3) has a dog clutch (6) and/or an inclined-surface actuating mechanism (7) for each wheel drive shaft (11).

14. Gardening appliance (1) for carrying out a method according to any one of the preceding claims,
- wherein the gardening appliance (1) has a traction drive system (2),
- wherein the traction drive system (2) has a clutch (3), an electric motor drive system (4), a user-triggerable signalling device (5) and a control device (12),
- wherein the clutch (3) is designed to, as a result of forward rotation, automatically engage for forward drive of the gardening appliance (1) and, as a result of backward rotation, automatically disengage for freewheeling of the gardening appliance (1),
- wherein the electric motor drive system (4) is designed to effect the forward rotation and the backward rotation of the clutch (3), and
- wherein the control device (12) is designed
- to, in a user-triggered manner by way of a change in a signal state (S5) of the signalling device (5), operate the electric motor drive system (4) in a running-down and/or braking operating mode (LBM) in order to lower a motor rotational speed (n4) of the forward-rotating electric motor drive system (4),
- to acquire whether a back electromotive force (BEMF) caused by the electric motor drive system (4) or a variable based on the back electromotive force satisfies a standstill criterion (SK), wherein the standstill criterion (SK) is characteristic of an attainment of a standstill state of the electric motor drive system (4), and
- to, if the standstill criterion (SK) is satisfied, operate the electric motor drive system (4) in a backward-rotation operating mode (RM) to effect the backward rotation of the electric motor drive system (4) for the purposes of disengaging the clutch (3) for freewheeling of the gardening appliance (1),
- **characterized in that** the standstill criterion (SK) is that the back electromotive force (BEMF) or the variable based on the back electromotive force is equal to or lower than a standstill upper threshold value (SO).

## Revendications

1. Procédé de fonctionnement d'un outil de jardinage (1),
- l'outil de jardinage (1) comportant un système de propulsion (2),
- le système de propulsion (2) comportant un embrayage (3), un système d'entraînement à moteur électrique (4) et un dispositif de signalisation (5) déclenchable par l'utilisateur,
- l'embrayage (3) étant conçu pour embrayer automatiquement par rotation en avant afin de propulser l'outil de jardinage (1) vers l'avant et pour désembrayer automatiquement par rotation en arrière afin de passer l'outil de jardinage (1) en roue libre, et
- le système d'entraînement à moteur électrique (4) étant conçu pour faire tourner l'embrayage (3) vers l'avant et vers l'arrière, et
- le procédé comprenant les étapes suivantes :
a) une fois le déclenchement effectué par l'utilisateur par un changement d'un état de signalisation (S5) du dispositif de signalisation (5), faire fonctionner le système d'entraînement à moteur électrique (4) dans un mode de fonctionnement en roue libre et/ou en freinage (LBM) afin de réduire une vitesse de rotation de moteur (n4) du système d'entraînement à moteur électrique en rotation vers l'avant (4),
b) détecter si une force contre-électromotrice (BEMF) générée par le système d'entraînement à moteur électrique (4) ou une grandeur basée sur la force contre-électromotrice satisfait à un critère d'arrêt (SK),
le critère d'arrêt (SK) étant caractéristique du fait que le système d'entraînement à moteur électrique (4) s'arrête, et
c) dans le cas où le critère d'arrêt (SK) est satisfait, faire fonctionner le système d'entraînement à moteur électrique (4) dans un mode de fonctionnement en rotation arrière (RM) pour faire tourner en arrière le système d'entraînement à moteur électrique (4) afin de désembrayer l'embrayage (3) pour faire passer l'outil de jardinage (1) en roue libre,
- **caractérisé en ce que** le critère d'arrêt (SK) est le fait que la force contre-électromotrice (BEMF) ou la grandeur basée sur la force contre-électromotrice est égale ou inférieure à une valeur limite supérieure d'arrêt (SO).

2. Procédé selon la revendication 1,
- l'outil de jardinage (1) étant une tondeuse à gazon (11).

3. Procédé selon l'une des revendications précédentes,
- l'embrayage (3) comportant au moins un embrayage à griffes (6), l'embrayage à griffes (6) étant conçu pour désembrayer automatiquement par rotation arrière, et/ou
- l'embrayage (3) comportant au moins un mécanisme d'actionnement à surface inclinée (7), le mécanisme d'actionnement à surface inclinée (7) étant conçu pour embrayer automatiquement par rotation avant.

4. Procédé selon l'une des revendications précédentes,
- le système d'entraînement à moteur électrique (4) comportant un moteur à courant continu (17), le moteur à courant continu (17) étant conçu pour faire tourner l'embrayage (3) en avant et en arrière.

5. Procédé selon l'une des revendications précédentes, notamment selon la revendication 4, le système d'entraînement à moteur électrique (4) comportant un circuit en pont (8) destiné à faire fonctionner le système d'entraînement à moteur électrique (4), en particulier comportant le moteur à courant continu (17), au moins dans le mode de fonctionnement en roue libre et/ou de freinage (LBM) et le mode de fonctionnement en rotation arrière (RM).

6. Procédé selon l'une des revendications précédentes,
- à l'étape a) le mode de fonctionnement de freinage (BM) étant un mode de fonctionnement de freinage en court-circuit (KBM), et/ou
- l'étape b) étant réalisée après l'étape a).

7. Procédé selon l'une des revendications précédentes,
- l'étape a) étant réalisée pendant une durée spécifiée (ZD).

8. Procédé selon l'une des revendications précédentes,
- l'étape b) comportant : le fonctionnement du système d'entraînement à moteur électrique (4) dans le mode de fonctionnement en roue libre (LM).

9. Procédé selon l'une des revendications précédentes,
- le procédé comportant l'étape suivante :
une fois le déclenchement effectué par l'utilisateur par un autre changement d'un état de signalisation (S5) du dispositif de signalisation (5), faire fonctionner le système d'entraînement à moteur électrique (4) dans un mode de fonctionnement à rotation avant (VM) pour faire tourner le système d'entraînement à moteur électrique (4) vers l'avant afin de propulser l'outil de jardinage (1) vers l'avant.

10. Procédé selon l'une des revendications précédentes,
- le dispositif de signalisation (5) déclenchable par l'utilisateur étant conçu pour être mobile par l'utilisateur, et
- le système de propulsion (2) comportant un élément de réinitialisation (9), l'élément de réinitialisation (9) étant conçu pour appliquer une force sur le dispositif de signalisation (5) afin de réinitialiser un mouvement du dispositif de signalisation (5) en ce qui concerne le changement de l'état de signalisation (S5) du dispositif de signalisation (5).

11. Procédé selon l'une des revendications précédentes,
- le dispositif de signalisation (5) comportant un commutateur (10),
- l'état de signalisation (S5) étant un état de commutation (S10) du commutateur (10).

12. Procédé selon l'une des revendications précédentes,
- le système de propulsion (2) comportant au moins un arbre d'entraînement de roue (11),
- l'embrayage (3) étant relié fonctionnellement au système d'entraînement à moteur électrique (4) du côté entraînement et à l'au moins un arbre d'entraînement de roue (11) du côté sortie.

13. Procédé selon les revendications 3 et 12,
- le système de propulsion (2) comportant au moins deux arbres d'entraînement de roue (11), et
- l'embrayage (3) comportant un embrayage à griffes (6) et/ou un mécanisme d'actionnement à surface inclinée (7) pour chaque arbre d'entraînement de roue (11) .

14. Outil de jardinage (1) destiné à mettre en œuvre un procédé selon l'une des revendications précédentes,
- l'outil de jardinage (1) comportant un système de propulsion (2),
- le système de propulsion (2) comportant un embrayage (3), un système d'entraînement à moteur électrique (4), un dispositif de signalisation (5) déclenchable par l'utilisateur et un dispositif de commande (12),
l'embrayage (3) étant conçu pour embrayer automatiquement par rotation en avant afin de propulser l'outil de jardinage (1) vers l'avant et pour désembrayer automatiquement par rotation en arrière afin de passer l'outil de jardinage (1) en roue libre, et
- le système d'entraînement à moteur électrique (4) étant conçu pour faire tourner l'embrayage (3) vers l'avant et vers l'arrière, et
- le dispositif de commande (12) étant conçu pour,
- une fois le déclenchement effectué par l'utilisateur par un changement d'un état de signalisation (S5) du dispositif de signalisation (5), faire fonctionner le système d'entraînement à moteur électrique (4) dans un mode de fonctionnement en roue libre et/ou en freinage (LBM) afin de réduire une vitesse de rotation de moteur (n4) du système d'entraînement à moteur électrique en rotation vers l'avant (4),
- détecter si une force contre-électromotrice (BEMF) générée par le système d'entraînement à moteur électrique (4) ou une grandeur basée sur la force contre-électromotrice satisfait à un critère d'arrêt (SK), le critère d'arrêt (SK) étant caractéristique du fait que le système d'entraînement à moteur électrique (4) s'arrête, et
- dans le cas où le critère d'arrêt (SK) est satisfait, faire fonctionner le système d'entraînement à moteur électrique (4) dans un mode de fonctionnement en rotation arrière (RM) pour faire tourner en arrière le système d'entraînement à moteur électrique (4) afin de désembrayer l'embrayage (3) pour faire passer l'outil de jardinage (1) en roue libre,
- **caractérisé en ce que** le critère d'arrêt (SK) est le fait que la force contre-électromotrice (BEMF) ou la grandeur basée sur la force contre-électromotrice est égale ou inférieure à une valeur limite supérieure d'arrêt (SO).
